# EUROPEAN PATENT SPECIFICATION

(11) **EP 0 507 544 B1**
(45) Date of publication and mention of the grant of the patent: **14.08.1996**
(21) Application number: 92302819.5
(22) Date of filing: 31.03.1992
(51) Int. Cl.: F16J 15/18

(54) **Seal bushes for rotary shafts**
Abdichtungshülsen für rotierende Wellen
Douilles d'étanchéité pour arbres tournants

(30) Priority: 03.04.1991 GB 9106926
(43) Date of publication of application: 07.10.1992
(73) Proprietor: PONT-A-MOUSSON S.A., F-54000 Nancy (FR)
(72) Inventor: Beale, David William, Oadby, Leicester LE2 2FD (GB)
(74) Representative: Heath, Peter William Murray

(56) References cited:
- EP-A- 0 408 827
- FR-A- 2 143 464
- US-A- 2 511 109

## Description

This invention relates to seal carrying bushes for rotary shafts, and more particularly, but not exclusively, to such bushes for valves where the bushes comprise seal carrying bushes between valve stems and valve casing portions or bonnets, the bonnet being a member or portion of the valve casing fitting over the upper end of the protruding stem and being conformed around the stem such as to receive the sealing bush, and usually arranged to receive a top cap arranged to locate over the seal bush.

A problem in the provision of seal bushes of the kind just mentioned is to ensure a simple and inexpensive arrangement in which the bush fits firmly and securely within the aperture in the bonnet designated for it, without significant capability for rotation during use of the valve, but at the same time capable of easy and simple removal for replacement or servicing of the elastomeric sealing rings it carries.

EP-A-0 408 827 discloses a seal carrying bush arrangement for sealingly mounting a rotary shaft within an appropriately apertured support body wherein the bush is of a generally circular section sleeve-like nature for the receipt of the rotary shaft therethrough and for fitting within a correspondingly internally circular section shaped aperture in the support body the bush being provided with at least one outwardly extending lug or shoulder around its outer periphery, but does not resolve this problem.

It is an object of the present invention to provide an arrangement which overcomes, or at least substantially reduces, the above mentioned problem.

In accordance with the invention there is provided a seal carrying bush arrangement for sealingly mounting a rotary shaft within an appropriately apertured support body wherein the bush is of a generally circular section sleeve-like nature for the receipt of the rotary shaft therethrough and for fitting within a correspondingly internally circular section shaped aperture in the support body, the bush being provided with at least one outwardly extending lug or shoulder around its outer periphery, characterized in that the lug or shoulder has a protrusion extending axially inwardly of the bush or a recess extending axially outwardly of the bush such as to be capable of mating with a corresponding recess or protrusion respectively of the support body, whereby when located therein, the bush is prevented from rotation within the aperture in the support body, in that the protrusion and corresponding recess have inclined side walls so as to be generally "V" shaped, and in that there is included means for rotation of the bush within the apertured support body.

In one embodiment of the invention the protrusion is provided on the lug or shoulder, and the recess in the support.

Desirably, at least two diametrically opposed protrusions and associated recesses may be provided on the bush and on the support body.

The lugs may protrude directly from the outer periphery of the bush or may be integral with a peripheral flange extending peripherally around the bush adjacent one end thereof, being disposed in either case so that the axially extending protrusions extend generally axially along the bush to engage in corresponding recesses in the wall of the aperture in the support body.

The means for rotation of the bush within the apertured support body may comprise a multi-facetted flange, or a hexagon sided flange for example. Rotation of the hexagon shaped flange may be by means of a spanner for example, rotation causing the lugs to ride up the corresponding walls of the recesses in the walls of the apertures.

The invention includes within its scope a valve assembly incorporating a seal bush arrangement as hereinabove defined.

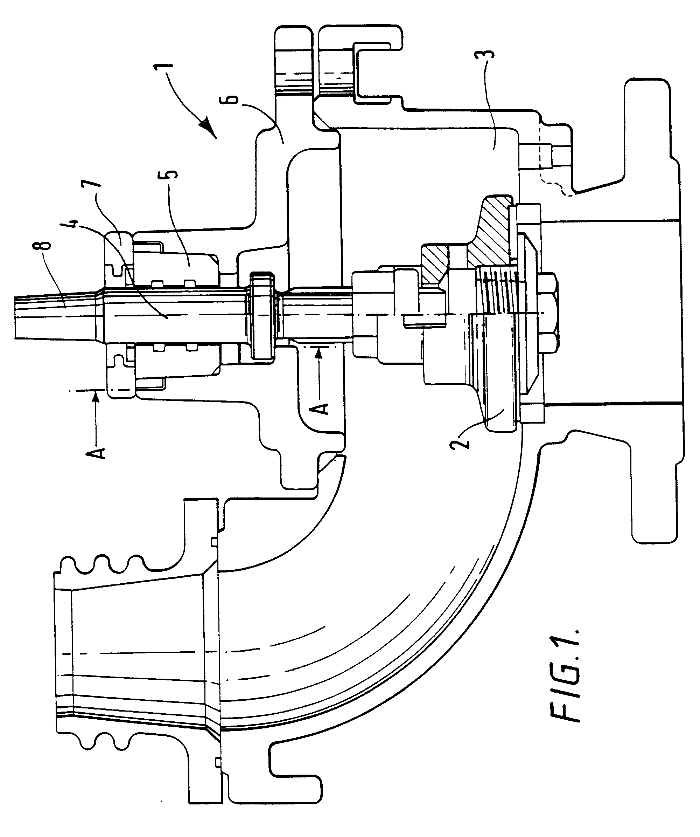

In order that the invention may be more readily understood one embodiment thereof will now be described by way of example with reference to the accompanying drawings in which:-
Figure 1 is a sectional elevation of a valve assembly incorporating a seal carrying bush in accordance with the invention;
Figure 2 is a section on the line A-A of Figure 1; and
Figure 3 is an expanded isometric view of the seal bush arrangement of Figure 2.

Referring now to the drawings it will be seen that there is shown a valve assembly 1 (comprising a fire hydrant) including a screw down seal 2 in a pipeline body 3 of the assembly, the screw down seal being controlled via a stem 4 passing through a seal bush 5 mounted within a bonnet 6 and top cap 7 and protruding externally at 8 for rotation for control of the seal 2.

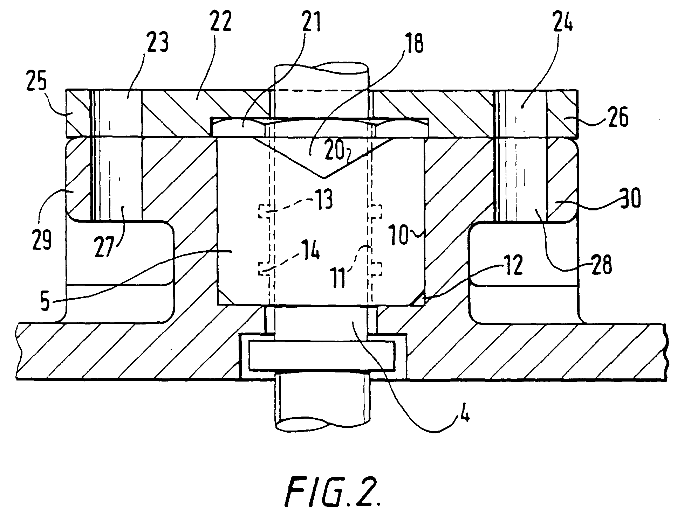

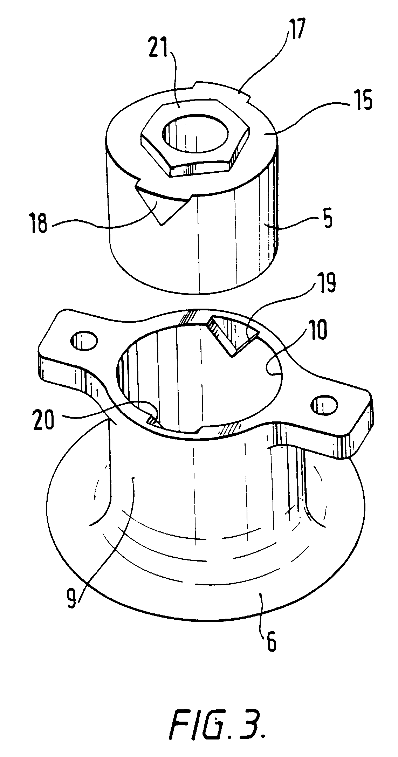

The arrangement of the seal carrying bush 5 is shown more clearly in Figures 2 and 3, where it will be seen that the bonnet casting 6 is provided with an appropriately shaped apertured upward protrusion 9 providing a support having a circular section aperture 10 therethrough for the correspondingly configured seal bush. The bush has an axial circular section aperture 11 through which is disposed the rotary control shaft 4 of the valve assembly.

In the usual way the bush seal is provided with a chamber 12 to take an appropriate O-ring (not shown) for sealing against the internal surface and the base of the aperture 10 of the bonnet casting support 9, and two internal peripheral grooves 13,14 to receive O-rings for sealing against the valve shaft 4.

At its axially outer end 15 the seal bush 5 is provided on opposed diametrical sides with two lug like portions having generally axially inwardly extending V-shaped protrusions 17,18 which mate within corresponding V-shaped recesses or shoulders 19,20 disposed within the side walls of the bonnet aperture 10.

The outer end 15 is provided with an outer extension 21 having side walls of hexagon configuration arranged to receive an appropriate sized spanner (not shown) for turning the bush 5 within the aperture in the bonnet casting aperture 10.

A top cap 22 for safe retention of the bush 5 is located by means of nuts and bolts (not shown) via apertures 23,24 and 27,28 in external flanges 25,26 and 29,30 of the top cap 22 and bonnet casting 9 respectively.

It is to be observed that the seal bush 5, and the corresponding aperture 10 in the bonnet casting, taper somewhat from top to bottom, i.e. it is of greater diameter adjacent the outer end thereof than the inner end.

By means of the invention we ensure that the bush does not rotate in the bonnet aperture when the spindle or shaft is turned since in use the V-shaped protrusions of the lugs within the recesses in the bonnet casting prevent such rotation.

Again, the V-shaped protrudrances on the lugs, in cooperation with the sides of the notches, assist in the removal of the bush when seal changes etc are necessary. Thus, after removal of the top cap 22 and by means of an appropriate spanner applied to the hexagon shaped extension, the bush can be rotated, which will cause the slopes of the protrudrances of the lugs to ride up the corresponding slopes of the notches or recesses to lift the bush. Because of the taper of the bush and its receiving aperture, the bush can then readily be removed.

It will be appreciated, of course, that instead of the hexagon shape periphery to the axial projection of the bush, a peg type of spanner may be applied to an appropriate shaped aperture in the outer end of the bush.

The tapering on the outside of the seal bush, and the associated aperture within the bonnet casting is additionally useful in that it allows manufacture of the bush, and assists manufacture of the bonnet casting aperture, by inexpensive moulding processes where taper for the removal of cores is necessary.

Still yet again it is to be noted that the corresponding tapered housing or aperture for the bush in the top of the valve bonnet does not require the dimensional accuracy of a housing threaded for the screwing in of bushes or of those machined for a close sliding fit. The design readily lends itself to the application of protective coatings such as an epoxy resin for corrosion resistant purposes.

## Claims

1. A seal carrying bush arrangement for sealingly mounting a rotary shaft (4) within an appropriately apertured support body wherein the bush (5) is of a generally circular section sleeve-like nature for the receipt of the rotary shaft (4) therethrough and for fitting within a correspondingly internally circular section shaped aperture (10) in the support body (9), the bush (5) being provided with at least one outwardly extending lug or shoulder around its outer periphery, characterized in that the lug or shoulder has a protrusion (17,18) extending axially inwardly of the bush (5) or a recess extending axially outwardly of the bush (5) such as to be capable of mating with a corresponding recess (19,20) or protrusion respectively of the support body (9), whereby when located therein, the bush (5) is prevented from rotation within the aperture (10) in the support body (9), in that the protrusion (17,18) and corresponding recess (19,20) have inclined side walls so as to be generally "V" shaped, and in that there is included means (21) for rotation of the bush (5) within the apertured support body (9).

2. A bush arrangement as claimed in Claim 1 wherein the means for rotation of the bush comprises a multi-facetted flange (21), arranged such that rotation thereof causes the lugs to rise up the corresponding walls of the recess (19, 20) in the walls of the aperture (10).

3. A bush arrangement as claimed in Claim 1 or 2 wherein the protrusion (17, 18) is provided on the lug or shoulder, and the recess (19,20) in the support (9).

4. A bush arrangement as claimed in Claim 1, 2 or 3 wherein at least two diametrically opposed protrusions (17,18) and associated recesses (19,20) are provided on the bush (5) and on the support body (9).

5. A bush arrangement as claimed in any one of the preceding Claims wherein the lugs protrude directly from the outer periphery of the bush (5) and are disposed so that the axially extending protrusions (17,18) extend generally axially along the bush to engage in corresponding recesses (19,20) in the wall of the aperture (10) in the support body (9).

6. A bush arrangement as claimed in any one of Claims 1 to 4 wherein the lugs are integral with a flange extending peripherally around the bush adjacent one end thereof and are disposed so that the axially extending protrusions (17,18) extend generally axially along the bush such as to engage in corresponding recesses (19,20) in the wall of the aperture (10) of the support body (9).

7. A valve assembly incorporating a seal bush arrangement as claimed in any one of the preceding Claims.

## Patentansprüche

1. Hülseneinheit mit Dichtungen zum dichten Anbringen einer rotierenden Welle (4) innerhalb eines mit einer geeigneten Öffnung versehenen Tragkörpers, wobei die Hülse (5) in Form einer Buchse mit im wesentlichen kreisförmigem Querschnitt zur Aufnahme der sie durchragenden, rotierenden Welle (4) und zum Einsetzen in eine entsprechende innere, einen kreisförmigen Querschnitt aufweisende Öffnung (10) des Tragkörpers (9) ausgebildet und mit zumindest einer sich nach außen erstreckenden Nase oder Schulter an ihrem Außenumfang versehen ist, dadurch gekennzeichnet, daß die Nase oder Schulter einen sich axial zum inneren Ende der Hülse (5) erstreckenden Vorsprung (17, 18) oder eine sich axial zum äußeren Ende der Hülse (5) erstreckende Aussparung aufweist, der bzw. die mit einer entsprechenden Aussparung (19, 20) bzw. einem Vorsprung des Tragkörpers (9) in Eingriff treten kann, wobei die Hülse (5), wenn sie in diesem angeordnet ist, an einer Drehung in der Öffnung (10) des Tragkörpers (9) gehindert ist, daß der Vorsprung (17, 18) und die zugehörige Aussparung (19, 20) geneigte Seitenwände besitzen, so daß sie im wesentlichen "V"-förmig ausgebildet sind, und daß Mittel (21) zum Drehen der Hülse (5) innerhalb des mit der Öffnung versehenen Tragkörpers (9) vorgesehen sind.

2. Hülseneinheit nach Anspruch 1, dadurch gekennzeichnet daß, die Mittel zum Drehen der Hülse einen mehrfach facettierten Flansch (21) aufweisen, der derart angeordnet ist, daß bei dessen Drehung die Nasen die entsprechenden Wände der Aussparung (19, 20) in den Wänden der Öffnung (10) hinaufsteigen.

3. Hülseneinheit nach Anspruch 1 oder 2, dadurch gekennzeichnet, daß der Vorsprung (17, 18) an der Nase oder der Schulter und die Aussparung (19, 20) im Träger (9) vorgesehen ist.

4. Hülseneinheit nach Anspruch 1, 2 oder 3, dadurch gekennzeichnet, daß zumindest zwei einander diametral gegenüberliegende Vorsprünge (17, 18) und zugehörige Aussparungen (19, 20) an der Hülse (5) und am Tragkörper (9) vorgesehen sind.

5. Hülseneinheit nach einem der vorangehenden Ansprüche, dadurch gekennzeichnet, daß die Nasen direkt am Außenumfang der Hülse (5) vorstehen und derart angeordnet sind, daß die sich axial erstreckenden Vorsprünge (17, 18) sich im wesentlichen axial entlang der Hülse erstrecken, um mit entsprechenden Aussparungen (19, 20) in der Wand der Öffnung (10) des Tragkörpers (9) in Eingriff zu treten.

6. Hülseneinheit nach einem der Ansprüche 1 bis 4, dadurch gekennzeichnet, daß die Nasen einstückig mit einem Flansch ausgebildet sind, welcher sich nahe einem Ende der Hülse über deren Umfang erstreckt, und derart angeordnet sind, daß sich die sich axial erstreckenden Vorsprünge (17, 18) im wesentlichen derart axial entlang der Hülse erstrecken, daß sie mit entsprechenden Aussparungen (19, 20) in der Wand der Öffnung (10) des Tragkörpers (9) in Eingriff treten.

7. Ventilanordnung mit einer Dichthülseneinheit nach einem der vorangehenden Ansprüche.

## Revendications

1. Dispositif de douille d'étanchéité pour monter de façon étanche un arbre rotatif (4) dans un corps de support à ouverture appropriée, dans lequel la douille (5) est de nature d'un manchon à section généralement circulaire pour enfiler l'arbre rotatif (4) et pour s'installer dans une ouverture (10) formée avec une section circulaire intérieure correspondante dans le corps de support (9), la douille (5) étant pourvue d'au moins une projection ou épaule s'étendant vers l'extérieur autour de sa périphérie, caractérisé en ce que la projection ou épaule a une saillie (17,18) s'étendant axialement vers l'intérieur de la douille (5) ou un creux s'étendant axialement vers l'extérieur de la douille (5) de sorte à être capable d'accoupler un creux (19,20) ou une saillie, respectivement, correspondant du corps de support (9), de sorte que, si la douille est installée, elle est empêchée de tourner dans l'ouverture (10) du corps de support (9), que la saillie (17,18) et le creux (19,20) correspondant ont des parois latérales inclinées de sorte à être de forme généralement en V, et en ce qu'un moyen (21) est inclus pour tourner la douille dans le corps de support (9) à ouverture.

2. Dispositif de douille selon la revendication 1, dans lequel le moyen pour tourner la douille comprend un flasque (21) à multiples facettes arrangé de sorte que sa rotation fait monter les projections le long des parois correspondantes du creux (19,20) dans les parois de l'ouverture (10).

3. Dispositif de douille selon la revendication 1 à 2, dans lequel la saillie (17,18) est prévue sur la projection ou épaule et le creux (19,20) dans le support (9).

4. Dispositif de douille selon la revendication 1, 2 ou 3, dans lequel au moins deux saillies (17,18) diamétralement opposées et creux associés (19,20) sont prévus sur la douille et sur le corps de support (9).

5. Dispositif de douille selon une des revendications précédentes, dans lequel les projections font saillie directement de la périphérie extérieure de la douille et sont disposées de sorte que les saillies (17,18) s'étendant axialement, s'étendent généralement axialement le long de la douille pour s'engager dans des creux (19,20) correspondants dans la paroi de l'ouverture (10) dans le corps de support (9).

6. Dispositif de douille selon une des revendications 1 à 4, dans lequel les saillies font parties intégrantes d'un flasque s'étendant sur la périphérie autour de la douille adjacent à une extrémité de celle-ci et sont disposées de sorte que les saillies (17,18) s'étendant axialement, s'étendent généralement axialement le long de la douille de sorte à s'engager dans des creux (19,20) correspondants dans la paroi de l'ouverture (10) du corps de support.

7. Assemblage de soupape incorporant un dispositif de douille d'étanchéité tel que revendiqué dans une quelconque des revendications précédentes.
